# FASCICULE DE BREVET EUROPEEN

(11) **EP 2 586 159 B1**
(45) Date de publication et mention de la délivrance du brevet: **30.03.2016**
(21) Numéro de dépôt: 11730380.0
(22) Date de dépôt: 14.04.2011
(51) Int. Cl.: H04L 12/26

(54) **DISPOSITIF DE COLLECTE DE DONNEES POUR LA SURVEILLANCE DE FLUX DANS UN RESEAU DE DONNEES**
DATENSAMMELVORRICHTUNG ZUR ÜBERWACHUNG VON STRÖMEN IN EINEM DATENNETZWERK
DATA COLLECTION DEVICE FOR MONITORING STREAMS IN A DATA NETWORK

(30) Priorité: 23.06.2010 FR 1055016
(43) Date de publication de la demande: 01.05.2013
(73) Titulaire: Qosmos, 75017 Paris (FR)
(72) Inventeur: TOLLET, Jérôme, F-75003 Paris (FR); ABELA, Jérôme, F-92700 Colombes (FR)
(74) Mandataire: Cabinet Plasseraud
(86) Numéro de dépôt international: PCT/FR2011/050867
(87) Numéro de publication internationale: WO 2011/161340

(56) Documents cités:
- US-A1- 2009 327 993
- US-B1- 7 188 168
- PATRICK DÜSSEL ET AL: "Incorporation of Application Layer Protocol Syntax into Anomaly Detection", 16 décembre 2008 (2008-12-16), INFORMATION SYSTEMS SECURITY, SPRINGER BERLIN HEIDELBERG, BERLIN, HEIDELBERG, PAGE(S) 188 - 202, XP019112958, ISBN: 978-3-540-89861-0 page 190 - page 193
- PANG R ET AL: "Binpac: A yacc for writing application protocol parsers", PROCEEDINGS OF THE ACM SIGCOMM INTERNET MEASUREMENT CONFERENCE, IMC - PROCEEDINGS OF THE 2006 ACM SIGCOMM INTERNET MEASUREMENT CONFERENCE, IMC 2006 2006 ASSOCIATION FOR COMPUTING MACHINERY US, 2006, pages 289-300, XP002618060, DOI: DOI:10.1145/1177080.1177119

## Description

La présente invention concerne les techniques de surveillance de flux de communication dans des réseaux de données.

Dans le cadre de la surveillance de flux de données dans un réseau de données tel qu'Internet, les équipements sont confrontés à la multiplication des protocoles utilisés, à la masse des données transférées ainsi qu'à la multiplicité des émetteurs/récepteurs.

Il existe actuellement deux types de dispositifs pour la mise en oeuvre de telles surveillances de flux. Des dispositifs d'un premier type collectent pendant une durée déterminée un ensemble de paquets puis, dans une étape ultérieure, analysent et traitent les paquets collectés. Un exemple de ce type de dispositif repose sur le logiciel distribué sous la marque Wireshark, autrefois la marque Ethereal.

Le second type de dispositif utilise des mécanismes matériels pour acquérir les données puis les transmettre à des dispositifs d'analyse. Très souvent la transmission d'information entre l'acquisition et les dispositifs d'analyse repose sur le protocole ipfix standardisé par l'IETF (Internet Engineering Task Force) sous la référence RFC 3917.

Dans "Incorporation of Application Layer Protocol Syntax into Anomaly Detection", Information Systems Security, Springer, pp. 188-202, décembre 2008, P. Düssel et al. décrivent l'incorporation de la syntaxe d'un protocole de couche applicative dans un processus de détection d'anomalies dans des réseaux de télécommunications. Un système de détection d'intrusion appelé "Bro" capture des paquets sur le réseau et réassemble des segments TCP pour transmettre des paquets entrants à un analyseur de protocole utilisant un langage d'analyse syntaxique (yacc) appelé "binpac".

La demanderesse a développé des technologies de surveillance de réseaux de type Internet. Elle a en particulier déposé les demandes de brevet EP 1 722 509 A1 et EP 1 722 508 A1 décrivant des architectures multiniveaux permettant d'examiner en temps réel des empilements de protocoles complexes afin d'en extraire les flux, c'est-à-dire l'ensemble structuré de données transmis entre un émetteur et un récepteur.

Au vu de la quantité d'informations à traiter au niveau des collecteurs de données, ceux-ci doivent se limiter à faire le traitement strictement indispensable pour transmettre l'information pertinente à un analyseur et seulement celle-ci.

Certaines solutions chargent les collecteurs de données d'opérations de traitement permettant un transfert d'informations structurées et pertinentes. Toutefois, ces solutions obligent à développer des architectures matérielles très performantes compte tenu de la masse d'informations à examiner en temps réel par le collecteur de données.

D'autres types de solutions limitent les traitements effectués par les collecteurs de données, en leur faisant transférer des données non structurées, y compris des données redondantes et/ou inutiles, ce qui entraîne d'autres contraintes au niveau de l'analyseur et de son interface avec le collecteur.

Une autre possibilité consiste à effectuer un traitement différé au niveau de l'analyseur. Il en résulte toutefois une moindre réactivité de l'application de surveillance de flux.

Il serait donc avantageux de proposer une technique de collecte de données qui permette de transférer à l'analyseur seulement des données structurées et pertinentes tout en limitant les ressources matérielles nécessaires aux traitements d'acquisition et de mise en forme de ces données.

Selon l'invention, il est proposé un dispositif de collecte de données selon la revendication 1 et un procédé de surveillance de flux selon la revendication 2. Des modes de réalisation de l'invention sont décrits dans les revendications dépendantes 2 à 5 et 7 à 9.

-

D'autres particularités et avantages de la présente invention apparaîtront dans la description ci-après d'un exemple de réalisation non limitatif, en référence aux dessins annexés, dans lesquels :
- la figure 1 est une vue schématique d'un système de surveillance dans un réseau de données selon un mode de réalisation de l'invention;
- la figure 2 est une vue schématique fonctionnelle d'un dispositif collecteur de données du système de surveillance de la figure 1;
- la figure 3 est un organigramme de fonctionnement du dispositif collecteur de la figure 2;
- la figure 4 est un exemple illustratif de décomposition en arbre dynamique d'une requête HTTP selon un mode de réalisation de l'invention; et
- la figure 5 montre un exemple de structure en arbre dans le cas d'un protocole de messagerie électronique.

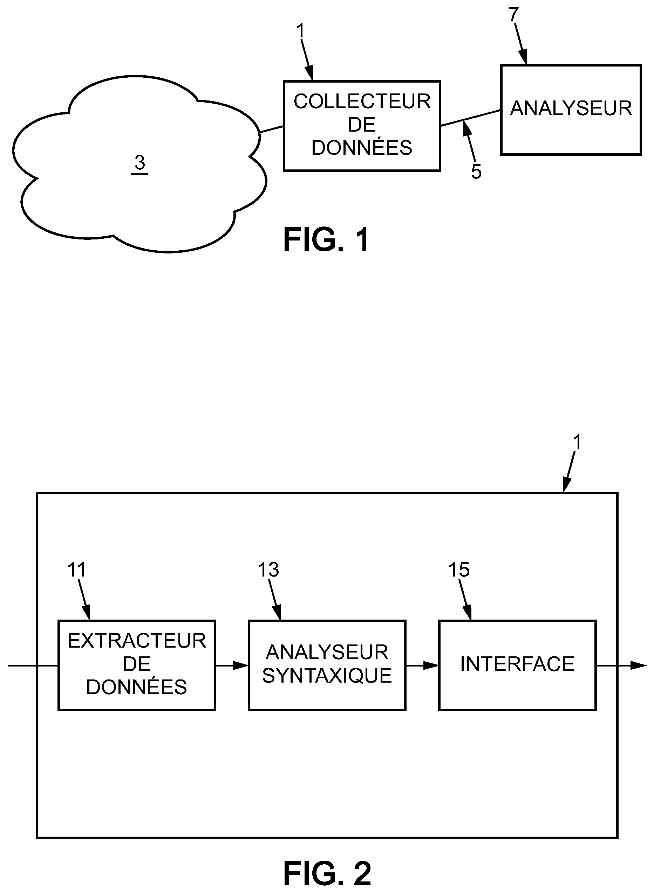

En référence à la figure 1, un système de surveillance comporte un collecteur de données 1 branché directement sur un réseau de données 3, par exemple l'Internet, utilisant un protocole par paquets de type IP ("Internet Protocol") afin d'acquérir les paquets circulant sur ce réseau. Ce collecteur de données 1 utilise par exemple l'architecture détaillée dans la demande de brevet EP 1 722 509 A1 ou la demande de brevet EP 1 722 508 A1. Il transmet par une connexion de données 5 à un analyseur 7 des données structurées extraites des paquets circulant sur le réseau de données 3.

Les transmissions sur le réseau de données 3 utilisent de façon classique un empilement de protocoles de transmission. Ainsi, par exemple, dans le cadre de la consultation de sites web, un paquet IP contient une structure de données du protocole TCP ("Transmission Control Protocol") contenant elle-même une structure de données HTTP ("HyperText Transfer Protocol"). Dans le cadre de la messagerie électronique (e-mail), la structure de données TCP contient une structure de données SMTP ("Simple Mail Transfer Protocol"), etc. En fonction du type de flux considéré, de nombreux autres protocoles de niveau applicatif ou transport sont employés, comme il est bien connu dans le domaine des communications sur réseau IP.

Les informations circulant dans le cadre d'un flux donné sont rarement contenues dans un unique paquet IP. Ces informations sont au contraire segmentées pour être transmises dans plusieurs paquets successifs. Ces paquets IP circulent sur le réseau, l'en-tête du paquet contenant des informations pour permettre son routage, notamment les adresses IP de la source et de la destination du paquet. Il peut s'intercaler entre eux d'autres paquets relevant d'autres flux. Les paquets peuvent suivre des routes différentes au sein du réseau, et/ou être reçus d'un un ordre différent de celui dans lequel ils ont été émis.

Pour surveiller un flux donné, il convient d'identifier les paquets relevant du flux en question, d'en extraire les informations pertinentes et de les analyser en fonction des besoins de l'application de surveillance considérée. Dans l'architecture de la figure 1, l'identification et l'extraction incombent au collecteur de données 1 tandis que l'application de surveillance proprement dite est exécutée par l'analyseur 7.

En référence à la figure 2, le collecteur de données 1 comporte un extracteur de données 11 connecté à un noeud ou un lien du réseau 3 afin d'observer le trafic. L'extracteur de données 11 a une interface réseau adaptée aux couches protocolaires basses utilisées par le réseau 3 au niveau du noeud ou lien où l'extracteur est connecté. Il extrait les données contenues dans les paquets appartenant à un flux spécifié, le flux étant défini par un émetteur, un récepteur et un protocole (par exemple, SMTP pour du courrier électronique, HTTP pour de la navigation web, etc.).

Le collecteur de données 1 comporte en outre un analyseur syntaxique 13 qui reçoit en temps réel des données extraites par l'extracteur 11 pour un flux donné. L'analyseur syntaxique 13 dispose de ressources logiques incorporant des règles syntaxiques du protocole pertinent pour le flux considéré. Il décompose les données extraites du flux en éléments, encore appelés événements, respectant la syntaxe du protocole du flux. Les éléments ainsi obtenus sont fournis à une interface 15 qui se charge de les transmettre à l'analyseur externe 7 avec des indicateurs d'états arborescents.

La décomposition des données du flux en éléments est effectuée par l'analyseur syntaxique 13 en fonction des règles syntaxiques applicables au protocole, qui permettent de représenter ces éléments suivant une structure en arbre. En pratique, la structure en arbre n'est pas mémorisée de manière complète au niveau du collecteur de données 1. Elle est reconstituée par l'analyseur de données structurées 7 si l'application le requiert. Le collecteur de données 1 se contente de mémoriser des états arborescents dont des indicateurs sont respectivement associés aux éléments résultant de la décomposition opérée par l'analyseur syntaxique 13.

L'indicateur d'état arborescent associé à un élément repère cet élément dans la structure en arbre pour que l'analyseur de données structurées 7 puisse le situer dans le flux surveillé.

Par arbre, il est entendu une structure de données au sens de la théorie des graphes comportant une donnée racine et des données filles de telle sorte qu'une donnée fille n'est reliée qu'à une seule donnée parente de niveau supérieur. Une donnée comportant des liens vers des données filles est appelée noeud de l'arbre et une donnée sans donnée fille est appelée feuille de l'arbre. Un arbre est donc un graphe ne comportant pas de boucle.

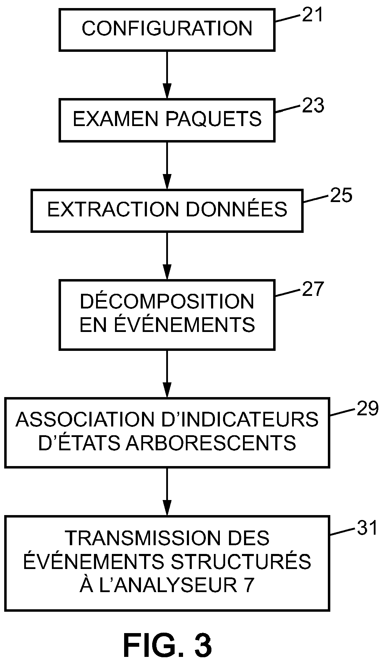

Le fonctionnement général du collecteur 1 est illustré par le diagramme de la figure 3. Dans une étape de configuration 21, les paramètres nécessaires à l'extracteur 11 lui sont fournis, en particulier:
- l'émetteur, le récepteur et le protocole pertinents pour un flux surveillé;
- une indication de types de données à extraire (toutes les données, certains messages seulement, données respectant telle ou telle condition configurable, ...). Dans une configuration simple, toutes les données du flux sont extraites, les éventuels filtrages étant effectués au niveau de l'analyseur 7. Spécifier que certains types de données seulement sont à extraire permet, de manière facultative, de réduire la charge du collecteur 1 et la quantité d'information à faire transiter sur la connexion 5;
- l'identification d'une instance de l'analyseur syntaxique 13 en charge du flux considéré puisqu'en pratique, l'extracteur 11 et l'analyseur 13 peuvent examiner plusieurs flux à la fois.

À l'étape 23, l'extracteur 11 examine les paquets au fur et à mesure de leurs transmissions sur le réseau 3. Pour ce faire, il utilise par exemple le procédé de reconnaissance et d'analyse de protocoles décrit dans la demande de brevet WO 2004/017595 A2. Il est ainsi capable d'extraire, à l'étape 25, les données appartenant au protocole spécifié lors de la configuration et circulant de l'émetteur spécifié vers le récepteur spécifié, et de transmettre ces données en temps réel à l'analyseur syntaxique 13.

Afin d'illustrer le fonctionnement de l'analyseur syntaxique 13 à l'étape de décomposition 27 indiquée sur la figure 3, on considère le cas particulier d'un flux obéissant au protocole HTTP entre un émetteur et un récepteur donnés. Dans cet exemple illustratif, l'extracteur 11 analyse les paquets et extrait dans deux paquets successifs, après suppression des entêtes, l'information indiquée au Tableau I.

**Tableau I**

| Numéro paquet | Contenu HTTP du paquet |
|---|---|
| P1 | GET /search?hl=fr& |
| P2 | q=brevet HTTP/1.0\nHost: google.fr\n |

Dans ce cas particulier, la requête HTTP complète:

```
  GET /search?hl=fr&q=brevet HTTP/1.0\nHost: google.fr\n
```

a été segmentée en deux paquets pour qu'elle puisse être transportée tout en respectant les limites imposées par les protocoles de niveau inférieur (TCP, IP, couches 1 et 2) en termes de taille de la charge utile.

Sémantiquement, ce message HTTP se décompose en une commande de requête "GET" et un identifiant de ressource URI ("Uniform Resource Identifier"). L'URI se décompose lui-même en éléments ou événements syntaxiquement pertinents. Ces éléments sont agencés dans les données placées dans les paquets conformément aux règles syntaxiques propres au protocole considéré (ici HTTP).

Par exemple, les données du paquet P1 peuvent se décomposer comme l'indique le Tableau II,

**Tableau II**

| Numéro d'événement | contenu |
|---|---|
| 1.1 | request |
| 1.2 | uri=/search?hl=fr& |
| 1.3 | uri_param |
| 1.4 | name = hl |
| 1.5 | value = fr |

tandis que les données du paquet P2 peuvent se décomposer comme l'indique le Tableau III.

**Tableau III**

| Numéro d'événement | contenu |
|---|---|
| 2.1 | uri = q=brevet |
| 2.2 | uri_param |
| 2.3 | name = q |
| 2.4 | value = brevet |
| 2.5 | server = google.fr |

L'événement 1.1 correspond à la détection de la commande "GET". Ensuite, l'analyseur syntaxique 13 détermine que le reste du paquet P1 fait partie de l'identifiant de ressource URI, ce qui constitue l'événement suivant 1.2. Cet événement "uri=/search?hl=fr&" doit lui-même être décomposé en événements car il fait apparaître une liste de paramètres qui peut être incomplète. Cette nouvelle décomposition fait descendre d'un niveau dans la structure en arbre pour ajouter l'événement 1.3 qui annonce un paramètre d'URI. Ensuite, les événements 1.4 et 1.5 donnent les nom et valeur de ce premier paramètre. À réception du paquet P2, il apparaît que l'URI se poursuit (événement 2.1) avec un autre paramètre (2.2) dont les nom et valeur sont donnés par les événements 2.3 et 2.4. Finalement, après le numéro de version du protocole HTTP, qui peut être ignoré dans cet exemple, le dernier événement se rapporte au serveur interrogé, ici "google.fr".

L'analyseur syntaxique 13 effectue une décomposition de ce type à l'étape 27 en fonction de la syntaxe du protocole analysé, pour convertir les données brutes fournies par l'extracteur 11 en événements. Chaque protocole applicatif (SMTP, SIP, RTP, etc.) utilise une syntaxe propre, généralement différente de celle du protocole HTTP donné en exemple. L'analyseur syntaxique peut avoir une architecture modulaire lui permettant d'analyser des protocoles différents sur différents flux. Ainsi un nouveau protocole est analysable par l'analyseur syntaxique moyennant le développement d'un module spécifique à sa syntaxe.

On souhaite transmettre à l'analyseur externe 7 les données suffisantes pour lui permettre de reconstituer le flux, notamment suivant la structure en arbre, mais avec aussi peu d'information additionnelle que possible. Si le collecteur de données 1 ne transmet que les contenus d'événements indiqués dans les colonnes de droite des Tableaux II et III, il demeure des ambiguïtés. Par exemple, l'analyseur 7 ne pourra pas savoir si l'événement 1.2, 2.1 ou 2.5 concerne la même requête que l'événement 1.1. Pour éviter ces ambiguïtés sans avoir à transmettre des informations relevant de couches protocolaires plus basses (comme par exemple des numéros de séquence de segments TCP), les contenus d'événement sont transmis par le collecteur de données à l'étape 31 sous une forme structurée avec les indicateurs d'états arborescents associés par l'analyseur syntaxique 13 à l'étape 29.

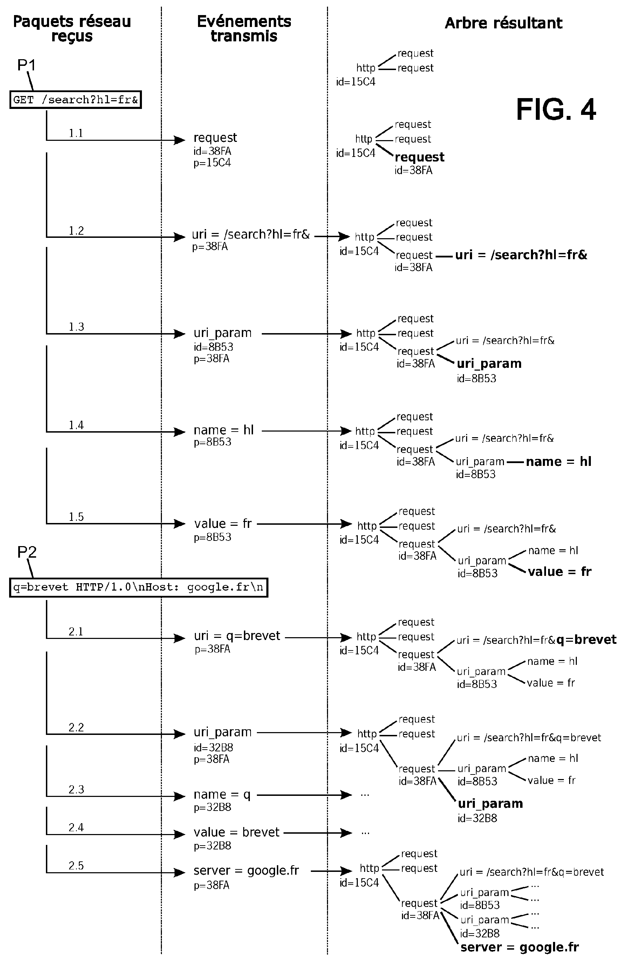

Les états arborescents peuvent être déterminés de la manière illustrée par la figure 4 dans l'exemple déjà discuté ci-dessus. Sur cette figure 4, la colonne de gauche montre la décomposition des paquets P1, P2 extraits du flux en éléments ou événements tels que rapportés aux Tableaux II et III. La colonne centrale de la figure 4 montre les événements tels que transmis par le collecteur de données 1 à l'analyseur externe 7 à l'étape 31, accompagnés de leurs indicateurs d'états arborescents respectifs, et la colonne de droite montre la manière dont l'analyseur 7 est capable de reconstituer l'arbre représentatif du flux surveillé. Dans cette partie droite, les caractères gras indiquent les éléments que l'analyseur 7 ajoute à l'arbre au fur et à mesure de leur réception depuis le collecteur 1.

L'arbre peut être construit par l'analyseur 7 au fur et à mesure des événements reçus, en commençant par un noeud racine correspondant au flux analysé. Ce noeud racine est désigné par "http" sur la figure 4 et porte par exemple un identifiant de noeud (id) égal à 15C4. Dans cet exemple, l'arbre comporte déjà deux requêtes reçues avant celle portée par les paquets P1 et P2, désignées en partie supérieure de la colonne de droite par les deux noeuds "request" dont les ramifications de sont pas représentées pour éviter de surcharger le dessin.

À réception de l'événement 1.1 indiquant une nouvelle requête pour le flux considéré, un nouveau noeud "request" est ajouté à l'arbre, ayant pour noeud père la racine "http". Comme il s'agit d'un événement dont l'analyseur syntaxique 13 sait, grâce aux règles du protocole HTTP, qu'il aura des données filles, il lui affecte un identifiant de noeud, dans cet exemple id = 38FA. L'indicateur d'état arborescent associé à l'événement 1.1 par l'analyseur syntaxique 13 à l'étape 29 comporte dans ce cas l'identifiant de noeud 38FA qu'il vient de lui affecter et l'identifiant (p) de son noeud père dans l'arbre, ici p = 15C4.

À réception de l'événement 1.1 avec l'indicateur (id = 38FA / p = 15C4), l'analyseur 7 pourra rajouter le nouveau noeud à l'arbre, dont il garde en mémoire l'identifiant 38FA en rapport avec sa position (fils du noeud racine 15C4).

L'événement suivant (2.2) résultant de l'étape de décomposition 27 se voit également affecter à l'étape 29 un indicateur d'état arborescent comportant l'identifiant de son noeud père dans l'arbre, en l'occurrence p = 38FA. Comme l'analyseur syntaxique 13 peut déterminer que cet événement correspond à une feuille de l'arbre, il n'a pas besoin de lui affecter un identifiant de noeud et son indicateur d'état arborescent peut donc se limiter à l'identifiant p = 38FA de son noeud père désignant la requête HTTP en cours.

Le troisième événement 1.3 annonce que la suite contient des paramètres de l'URI. Il peut donc être représenté comme un noeud fils du noeud "request" (38FA) qui aura des liens avec d'autres noeuds fils. En conséquence de quoi, l'analyseur syntaxique 13 lui affecte un identifiant unique, par exemple id = 8B53, de sorte que son indicateur d'état arborescent associé est (id = 8B53 / p = 38FA).

Les événements suivants (1.4, 1.5) qui donnent les nom et valeur de paramètres de l'URI sont attachés sous forme de feuilles au noeud 8B53. Leurs indicateurs d'états arborescents sont simplement p = 8B53, sans spécifier de nouvel identifiant de noeud.

Pour les événements 2.1-2.5 extraits du paquet P2, la logique de construction de l'arbre par l'analyseur 7, représenté en partie basse de la figure 4, est semblable à celle qui vient d'être décrite. L'analyseur syntaxique 13 du collecteur 1 affecte donc à la volée des nouveaux identifiants aux noeuds qui apparaissent (sans avoir à le faire pour les feuilles de l'arbre), et il associe à chaque événement transmis un indicateur d'état arborescent comportant l'identifiant unique de son noeud père et, s'il est lui-même représenté par un noeud ayant une descendance, l'identifiant nouvellement affecté à ce noeud.

Il est à noter que l'URI, qui dans l'exemple a été tronqué dans le paquet P1 par suite de la segmentation des paquets, est complété après réception de l'événement 2.1 par l'analyseur 7. Celui-ci peut en effet constater d'après la précédente feuille "uri=/search?hl=fr&" que l'URI est tronqué de sorte qu'à réception d'un nouvel événement de type URI (2.1), il procédera par concaténation sur la feuille correspondante plutôt que par création d'une nouvelle feuille. Ce traitement par l'analyseur 7 ne requiert pas de signalisation particulière de la part du collecteur 1.

L'ensemble du traitement de construction de l'arbre à l'aide des indicateurs d'états arborescents est visualisable sur la figure 4. La requête HTTP analysée est représentable sous forme d'un arbre tel que représenté en bas et à droite de la figure 4.

Cette transmission permet avantageusement de ne transmettre que les informations nécessaires tout en préservant la structuration, ou le contexte, des données transmises grâce aux identifiants de noeuds. Elle est effectuée au fur et à mesure de la réception des paquets par le collecteur 1 et elle permet à l'analyseur 7 de reconstituer les flux surveillés, immédiatement si nécessaire.

Un autre avantage est que le collecteur de données 1, qui est soumis aux plus grandes contraintes de rapidité de traitement, n'a besoin de conserver en mémoire que des informations dynamiques minimales, correspondant aux identifiants des noeuds qu'on rencontre dans l'arbre en remontant jusqu'à la racine à partir de l'événement courant. Les règles syntaxiques du protocole considéré permettent, en examinant la suite du flux, de se rattacher au noeud approprié. Les informations relatives aux noeuds frères ou cousins de l'événement courant dans l'arbre n'ont pas besoin d'être conservées par le collecteur 1.

Il faut noter que les procédés et dispositifs selon l'invention ne se limitent nullement au protocole HTTP qui n'a été mentionné que pour illustrer en termes concrets un exemple de réalisation.

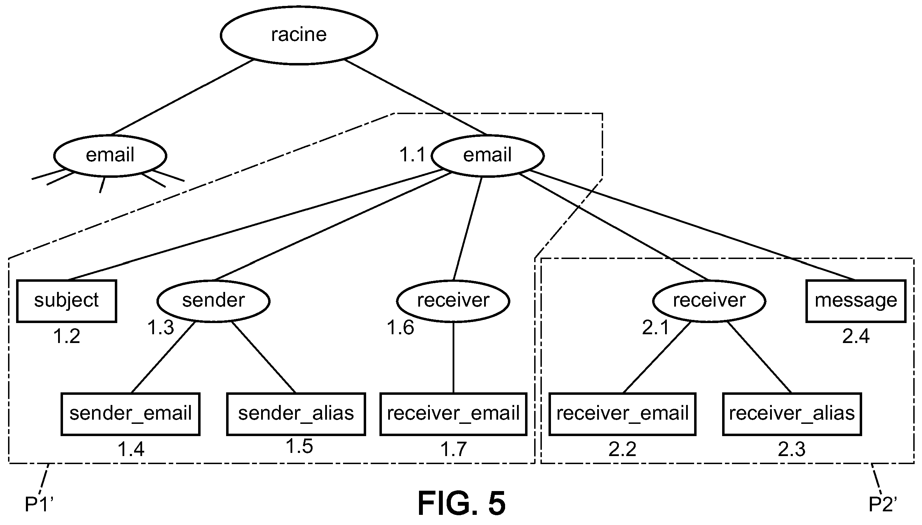

Pour donner un autre exemple, on peut considérer un protocole applicatif de messagerie, tel SMTP. Un flux de ce protocole entre un émetteur et un récepteur donne lieu à des messages successifs (*email* dans la représentation en arbre de la figure 5) ayant chacun un objet (*subject*), un émetteur (*sender*) ayant une adresse de messagerie (*sender_email*) et un pseudonyme éventuel (*sender_alias*), un ou plusieurs destinataires (*receiver*) ayant chacun une adresse de messagerie (*receiver_email*) et un pseudonyme éventuel (*receiver_alias*), un corps de message (*message*) et d'autres champs éventuels (indicateurs d'urgence, de confidentialité, pièce(s) jointe(s), etc.). Ces différents champs d'un message sont repérables par l'analyseur syntaxique 13 si on lui fournit les règles syntaxiques appropriées du protocole employé. Ils sont souvent transmis dans des paquets IP différents en fonction de la segmentation opérée au niveau de l'émetteur.

La figure 5 détaille les ramifications dans l'arbre que peut construire l'analyseur de données structurées 7 pour représenter un exemple de message simple ayant deux destinataires. On suppose que les éléments placés dans le cadre en traits interrompus sont extraits d'un premier paquet P1' et que ceux placés dans le cadre en traits mixtes sont extraits d'un deuxième paquet P2' (qui peut être suivi d'un ou plusieurs autres paquets contenant une suite du corps du message, des pièces jointes, etc.).

Dans cet exemple, l'étape de décomposition 27 donne lieu à sept événements 1.1-1.7 pour le premier paquet P1' et quatre événements 2.1-2.4 pour le deuxième paquet P2'. À l'étape 29, l'analyseur syntaxique 13 affecte des identifiants aux noeuds successivement détectés (représentés par des ellipses sur la figure 5) et rattache ces noeuds ainsi que les feuilles (représentées par des rectangles) à des noeuds pères respectifs. Ces identifiants et ces rattachements sont transmis en tant qu'indicateurs d'états arborescents à l'analyseur externe 7 qui reconstituera tout ou partie de l'arbre représenté sur la figure 5 si l'application le requiert.

On observe qu'après avoir traité le premier paquet P1' qui se termine par l'adresse d'un destinataire (événement 1.7), l'analyseur syntaxique 13 du collecteur de données 1 n'a besoin de conserver en mémoire que l'identifiant du noeud père (1.6) de cet événement, pour le cas où un paquet ultérieur contiendrait un pseudonyme du destinataire en question, l'identifiant du noeud grand-père (1.1), pour le cas où le paquet suivant du flux commencerait par le corps du message, la date, une pièce jointe ou autre et l'identification du noeud racine pour le cas où un nouveau message apparaîtrait dans le flux.

La méthode ci-dessus de représentation arborescente des données transmises dans un flux et de transmission d'une description structurelle minimale des éléments pouvant se placer dans l'arbre est applicable à tout type de protocole à partir d'une description des règles syntaxiques pertinente pour le protocole considéré.

L'invention a été illustrée et décrite en détail dans les dessins et la description précédente. Celle-ci doit être considérée comme illustrative et donnée à titre d'exemple et non comme limitant l'invention à cette seule description. De nombreuses variantes de réalisation sont possibles.

## Revendications

1. Dispositif de collecte de données pour la surveillance de flux dans un réseau de données (3) utilisant un mode de transmission par paquets, le dispositif comprenant:
• un extracteur (11) de données contenues dans des paquets appartenant à un flux défini par un émetteur, un récepteur et un protocole;
• un analyseur syntaxique (13) agencé pour:
- recevoir les données en temps réel de l'extracteur;
- décomposer les données reçues en éléments en fonction de règles syntaxiques dudit protocole, les règles syntaxiques permettant de représenter lesdits éléments suivant une structure en arbre, ladite structure en arbre étant une structure de données comportant une donnée racine et des données filles de telle sorte qu'une donnée fille n'est reliée qu'à une seule donnée parente de niveau supérieur, une donnée comportant des liens vers des données filles étant appelée noeud et une donnée sans donnée fille étant appelée feuille; et
- associer des indicateurs d'états arborescents respectifs à certains au moins desdits éléments, où l'indicateur d'état arborescent associé à un élément repère ledit élément dans la structure en arbre et comporte un identifiant d'un noeud père de la structure en arbre auquel se rattache un emplacement recevant ledit élément dans la représentation suivant la structure en arbre; et
• une interface (15) pour transmettre à un analyseur de flux (7) les indicateurs d'états arborescents accompagnés des éléments auxquels ils ont été associés.

2. Dispositif selon la revendication 1, dans lequel l'analyseur syntaxique (13) est en outre agencé pour:
- affecter un identifiant de noeud à un élément courant s'il est déterminé selon les règles syntaxiques que l'élément courant est reçu, dans la représentation suivant la structure en arbre, à un emplacement situé à un noeud de la structure en arbre; et
- inclure l'identifiant de noeud affecté à l'élément courant dans l'indicateur d'état arborescent associé audit élément courant.

3. Dispositif selon la revendication 2, dans lequel l'analyseur syntaxique (13) est agencé pour ne conserver en mémoire, pour un flux donné après transmission d'un élément et de son indicateur d'état arborescent associé, que chaque identifiant de noeud rencontré en remontant la structure en arbre à partir de l'emplacement recevant ledit élément dans la représentation suivant la structure en arbre.

4. Système de surveillance de flux dans un réseau de données (3) utilisant un mode de transmission par paquets, le système comprenant un dispositif de collecte de données (1) selon l'une quelconque des revendications précédentes et un analyseur de flux (7) recevant les éléments transmis avec les indicateurs d'états arborescents associés.

5. Procédé selon la revendication 4, dans lequel l'analyseur de flux (7) est agencé pour construire une partie au moins de la structure en arbre à partir des éléments transmis avec les indicateurs d'états arborescents associés.

6. Procédé de surveillance de flux dans un réseau de données (3) utilisant un mode de transmission par paquets, le procédé comprenant:
• extraire (25) des données contenues dans des paquets appartenant à un flux défini par un émetteur, un récepteur et un protocole;
• décomposer (27) en éléments les données reçues en temps réel, en fonction de règles syntaxiques dudit protocole, les règles syntaxiques permettant de représenter lesdits éléments suivant une structure en arbre, ladite structure en arbre étant une structure de données comportant une donnée racine et des données filles de telle sorte qu'une donnée fille n'est reliée qu'à une seule donnée parente de niveau supérieur, une donnée comportant des liens vers des données filles étant appelée noeud et une donnée sans donnée fille étant appelée feuille;
• associer (29) des indicateurs d'états arborescents respectifs à certains au moins desdits éléments, où l'indicateur d'état arborescent associé à un élément repère ledit élément dans la structure en arbre et comporte un identifiant d'un noeud père de la structure en arbre auquel se rattache un emplacement recevant ledit élément dans la représentation suivant la structure en arbre; et
• transmettre (31) à un analyseur de flux (7) les indicateurs d'états arborescents accompagnés des éléments auxquels ils ont été associés.

7. Procédé selon la revendication 6, comprenant en outre:
• affecter un identifiant de noeud à un élément courant s'il est déterminé selon les règles syntaxiques que l'élément courant est reçu, dans la représentation suivant la structure en arbre, à un emplacement situé à un noeud de la structure en arbre; et
• inclure l'identifiant de noeud affecté à l'élément courant dans l'indicateur d'état arborescent associé audit élément courant.

8. Procédé selon la revendication 7, dans lequel, pour un flux donné après transmission d'un élément et de son indicateur d'état arborescent associé, n'est conservé en mémoire que chaque identifiant de noeud rencontré en remontant la structure en arbre à partir de l'emplacement recevant ledit élément dans la représentation suivant la structure en arbre.

9. Procédé selon l'une quelconque des revendications 6 à 8, comprenant en outre la construction d'une partie au moins de la structure en arbre au niveau de l'analyseur de flux (7) à partir des éléments transmis avec les indicateurs d'états arborescents associés.

## Patentansprüche

1. Datensammelvorrichtung zur Überwachung von Strömen in einem Datennetzwerk (3), das einen Paketübertragungsmodus verwendet, umfassend:
• einen Extraktor (11) von Daten, die in Paketen enthalten sind, die zu einem Strom gehören, der durch einen Sender, einen Empfänger und ein Protokoll definiert ist;
• einen Syntaxanalysator (13), der gestaltet ist:
- die Daten in Echtzeit vom Extraktor zu empfangen;
- die empfangenen Daten gemäß syntaktischen Regeln des Protokolls in Elemente zu zerlegen, wobei die syntaktischen Regeln es ermöglichen, die Elemente entsprechend einer Baumstruktur darzustellen, wobei die Baumstruktur eine Datenstruktur ist, die eine Wurzeldatenangabe und Zweigdatenangaben beinhaltet, so dass eine Zweigdatenangabe nur mit einer einzigen übergeordneten Datenangabe verbunden ist, wobei eine Datenangabe, die Verbindungen zu Zweigdatenangaben aufweist, als Knoten bezeichnet wird und eine Datenangabe ohne Zweigdatenangabe als Blatt bezeichnet wird; und
- zumindest einigen der Elemente jeweilige Hierarchiestellungsindikatoren zuzuordnen, wobei der einem Element zugeordnete Hierarchiestellungsindikator das Element in der Baumstruktur verortet und eine Kennung eines Vaterknotens der Baumstruktur aufweist, mit dem eine Aufnahmeposition des Elements in der der Baumstruktur entsprechenden Darstellung verbunden ist; und
• eine Schnittstelle (15) zum Übertragen der Hierarchiestellungsindikatoren gemeinsam mit den Elementen, denen sie zugeordnet wurden, an einen Stromanalysator (7).

2. Vorrichtung nach Anspruch 1, wobei der Syntaxanalysator (13) ferner gestaltet ist:
- einem aktuellen Element eine Knotenkennung zuzuweisen, wenn nach den syntaktischen Regeln festgestellt wird, dass das aktuelle Element in der der Baumstruktur entsprechenden Darstellung an einer Position empfangen wird, die sich an einem Knoten der Baumstruktur befindet; und
- die dem aktuellen Element zugewiesene Knotenkennung in den dem aktuellen Element zugeordneten Hierarchiestellungsindikator einzubeziehen.

3. Vorrichtung nach Anspruch 2, wobei der Syntaxanalysator (13) gestaltet ist, für einen bestimmten Strom nach Übertragung eines Elements und seines zugeordneten Hierarchiestellungsindikators nur jede Knotenkennung im Speicher zu bewahren, die von der Empfangsposition des Elements in der der Baumstruktur entsprechenden Darstellung ausgehend aufwärts anzutreffen ist.

4. System zur Überwachung von Strömen in einem Datennetzwerk (3), das einen Paketübertragungsmodus verwendet, umfassend eine Datensammelvorrichtung (1) nach einem der vorangehenden Ansprüche und einen Stromanalysator (7), der die mit den zugeordneten Hierarchiestellungsindikatoren übertragenen Elemente empfängt.

5. Verfahren nach Anspruch 4, wobei der Stromanalysator (7) gestaltet ist, zumindest einen Teil der Baumstruktur anhand der mit den zugeordneten Hierarchiestellungsindikatoren übertragenen Elemente zu erstellen.

6. Verfahren zur Überwachung von Strömen in einem Datennetzwerk (3), das einen Paketübertragungsmodus verwendet, umfassend:
• Extrahieren (25) der Daten, die in Paketen enthalten sind, die zu einem Strom gehören, der durch einen Sender, einen Empfänger und ein Protokoll definiert ist;
• Zerlegen (27) der empfangenen Daten in Echtzeit in Elemente gemäß syntaktischen Regeln des Protokolls, wobei die syntaktischen Regeln es ermöglichen, die Elemente entsprechend einer Baumstruktur darzustellen, wobei die Baumstruktur eine Datenstruktur ist, die eine Wurzeldatenangabe und Zweigdatenangaben beinhaltet, so dass eine Zweigdatenangabe nur mit einer einzigen übergeordneten Datenangabe verbunden ist, wobei eine Datenangabe, die Verbindungen zu Zweigdatenangaben aufweist, als Knoten bezeichnet wird und eine Datenangabe ohne Zweigdatenangabe als Blatt bezeichnet wird; und
• Zuordnen jeweiliger Hierarchiestellungsindikatoren zu zumindest einigen der Elemente, wobei der einem Element zugeordnete Hierarchiestellungsindikator das Element in der Baumstruktur verortet und eine Kennung eines Vaterknotens der Baumstruktur aufweist, mit dem eine Aufnahmeposition des Elements in der der Baumstruktur entsprechenden Darstellung verbunden ist; und
• Übertragen (31) der Hierarchiestellungsindikatoren gemeinsam mit den Elementen, denen sie zugeordnet wurden, an einen Stromanalysator (7).

7. Verfahren nach Anspruch 6, ferner umfassend:
• Zuweisen einer Knotenkennung zu einem aktuellen Element, wenn nach den syntaktischen Regeln festgestellt wird, dass das aktuelle Element in der der Baumstruktur entsprechenden Darstellung an einer Position empfangen wird, die sich an einem Knoten der Baumstruktur befindet; und
• Einbeziehen der dem aktuellen Element zugewiesenen Knotenkennung in den dem aktuellen Element zugeordneten Hierarchiestellungsindikator.

8. Verfahren nach Anspruch 7, wobei für einen bestimmten Strom nach Übertragung eines Elements und seines zugeordneten Hierarchiestellungsindikators nur jede Knotenkennung im Speicher bewahrt wird, die von der Empfangsposition des Elements in der der Baumstruktur entsprechenden Darstellung ausgehend aufwärts anzutreffen ist.

9. Verfahren nach einem der Ansprüche 6 bis 8, ferner umfassend die Erstellung zumindest eines Teils der Baumstruktur durch den Stromanalysator (7) anhand der mit den zugeordneten Hierarchiestellungsindikatoren übertragenen Elemente.

## Claims

1. Data collection device for monitoring streams in a data network (3) using a packet transmission mode, the device comprising:
• an extractor (11) of data contained in packets belonging to a stream defined by a transmitter, a receiver and a protocol;
• a syntax analyzer (13) arranged for:
- receiving the data from the extractor in real time;
- breaking down the data received into elements according to syntactic rules of said protocol, the syntactic rules making it possible to represent said elements as a tree structure, said tree structure being a data structure comprising a root data item and child data such that a child data item is only linked to a single higher-level parent data item, a data item having links to child data items being called a node and a data item with no child data item being called a leaf; and
- associating respective tree state indicators with at least some of said elements, where the tree state indicator associated with an element labels said element in the tree structure and contains an identifier of a parent node of the tree structure to which is attached a site receiving said element in the tree structure representation; and
• an interface (15) for transmitting the tree state indicators to a stream analyzer (7), together with elements with which they have been associated.

2. Device according to claim 1, wherein the syntax analyzer (13) is moreover arranged for:
- allocating a node identifier to a current element if it is determined according to the syntactic rules that the current element is received, in the tree structure representation, at a site situated at a node of the tree structure; and
- including the node identifier allocated to the current element in the tree state indicator associated with said current element.

3. Device according to claim 2, wherein the syntax analyzer (13) is arranged so that it only stores in memory, for a given stream after transmission of an element and its associated tree state indicator, each node identifier encountered when moving up the tree structure from the site receiving said element in the tree structure representation.

4. System for monitoring streams in a data network (3) using a packet transmission mode, the system comprising a data collection device (1) according to any one of the previous claims and a stream analyzer (7) receiving the transmitted elements with the associated tree state indicators.

5. System according to claim 4, wherein the stream analyzer (7) is arranged to construct at least a part of the tree structure from the transmitted elements with the associated tree state indicators.

6. Method for monitoring streams in a data network (3) using a packet transmission mode, the method comprising:
• extracting (25) data contained in packets belonging to a stream defined by a transmitter, a receiver and a protocol;
• breaking down (27) the data received into elements in real time, according to syntactic rules of said protocol, the syntactic rules making it possible to represent said elements according to a tree structure, said tree structure being a data structure comprising a root data item and child data such that a child data item is only linked to a single higher-level parent data item, a data item having links to child data items being called a node and a data item with no child data item being called a leaf;
• associating (29) respective tree state indicators with at least some of said elements, where the tree state indicator associated with an element labels said element in the tree structure and contains an identifier of a parent node of the tree structure to which is attached a site receiving said element in the tree structure representation; and
• transmitting (31) the tree state indicators to a stream analyzer (7), together with the elements with which they have been associated.

7. Method according to claim 6, further comprising:
• allocating a node identifier to a current element if it is determined according to the syntactic rules that the current element is received, in the tree structure representation, at a site situated at a node of the tree structure; and
• including the node identifier allocated to the current element in the tree state indicator associated with said current element.

8. Method according to claim 7, wherein, for a given stream after transmission of an element and its associated tree state indicator, no more is retained than each node identifier encountered when moving up the tree structure from the site receiving said element in the tree structure representation.

9. Method according to any one of claims 6 to 8, further comprising the construction of at least a part of the tree structure, at the stream analyzer (7) level, from the transmitted elements with the associated tree state indicators.
